# EUROPEAN PATENT SPECIFICATION

(11) **EP 3 514 341 B1**
(45) Date of publication and mention of the grant of the patent: **10.08.2022**
(21) Application number: 19152069.1
(22) Date of filing: 16.01.2019
(51) Int. Cl.: F01M 1/16, F16K 17/06, F01M 1/02, F16K 31/42, F16K 17/10

(54) **VARIABLE RELIEF VALVE DEVICE**
VARIABLE ENTLASTUNGSVENTILVORRICHTUNG
DISPOSITIF DE SOUPAPE DE DÉCHARGE VARIABLE

(30) Priority: 17.01.2018 JP 2018005766
(43) Date of publication of application: 24.07.2019
(73) Proprietor: Mikuni Corporation, Tokyo 101-0021 (JP); Mitsubishi Jidosha Kogyo Kabushiki Kaisha, Tokyo 108-8410 (JP)
(72) Inventor: OGI, Takeshi, Iwate (JP); IMAMATSU, Hideki, Iwate (JP); HASHIMOTO, Katsuhiro, Tokyo, 108-8410 (JP); TANIMURA, Yoshihiko, Tokyo, 108-8410 (JP); SAMESHIMA, Daigo, Tokyo, 108-8410 (JP)
(74) Representative: SSM Sandmair

(56) References cited:
- EP-A1- 2 305 971
- EP-A2- 2 236 879
- DE-A1-102013 217 121
- DE-A1-102014 226 033
- US-A1- 2012 241 022

## Description

### BACKGROUND OF THE INVENTION

### Field of the Invention

The present invention relates to a variable relief valve device capable of adjusting valve opening pressure.

### Description of the Related Art

An engine is configured so that oil, which is stored in an oil pan provided at a bottom of the engine, is circulated in an oil circulation circuit and supplied to drives of the engine to lubricate the drives.

In the oil circulation circuit, an oil pump is provided for pumping the oil stored in the oil pan. The oil pump is usually driven by the engine. The oil pump discharges the oil in proportion to an engine rotational speed. A discharge amount of the oil pump is small when the engine rotational speed is low, and the discharge amount of the oil pump increases with increasing engine rotational speed.

Since pressure in the oil circulation circuit increases with increasing engine rotational speed, the oil circulation circuit is provided with a relief valve that is opened when the oil is high in pressure to return part of the oil to the oil pan. In recent years, a relief valve device capable of adjusting valve opening pressure according to an engine rotational speed has been developed and adopted (Japanese Patent Laid-Open No. 2017-36830).

The relief valve device capable of adjusting valve opening pressure can supply oil at proper pressure to drives of an engine, for example, when the engine is in any of a low speed rotation range, a medium speed rotation range, and a high speed rotation range.

In the relief valve device disclosed in Japanese Patent Laid-Open No. 2017-36830, a valve body that slides in a housing is consisted of, in order, a first valve portion, a second valve portion having a larger outer diameter than the first valve portion, and a third valve portion. A main passage of oil is formed between the second valve portion and the third valve portion. High pressure oil is applied to the first valve portion to open the valve body to return part of the oil from the main passage to an oil pan, while oil adjusted in pressure by an oil control valve (OCV) is applied to a pressure receiving surface of the second valve portion opposite to the main passage to adjust valve opening pressure of the valve body.

The oil adjusted in pressure by the oil control valve to press the second valve portion is configured to be always returned from a pressure chamber through an orifice to the oil pan. There is a problem that with the orifice through which the oil supplied from the oil control valve to the pressure chamber is configured to be always returned to the oil pan, part of the oil is discharged through the orifice simultaneously with the oil is supplied from the oil control valve, preventing pressure of the oil in the pressure chamber from being sufficiently increased, thus preventing the second valve portion from being sufficiently pressed, reducing a range of reduction in the valve opening pressure, and preventing the valve opening pressure from being adjusted with high responsiveness.

There is also another problem that since the main passage of the oil is formed between the second valve portion and the third valve portion as described above, the housing needs to have a large size to ensure the volume of the main passage considering a shaft of the valve body, thereby limiting flexibility of oil passage design.

US2012241022 A1 discloses another variable relief valve device, according to the preamble of claim 1.

### SUMMARY OF THE INVENTION

The present invention is achieved in view of such problems, and has an object to provide a variable relief valve device having a simple configuration and capable of adjusting valve opening pressure with high responsiveness.

To achieve the object, the present invention provides a variable relief valve device including: a valve body including a first valve portion and a second valve portion coaxially formed and axially spaced apart from each other, with a shaft therebetween, the first valve portion having a front end forming a first pressure receiving surface, and the second valve portion having a larger diameter than the first valve portion and having a second pressure receiving surface with a larger pressure receiving surface area on a side of the first valve portion; a cylinder in which the valve body axially slides, the cylinder having an inner peripheral surface formed in two stages to have a step to provide inner diameters corresponding to outer diameters of the first valve portion and the second valve portion in sliding ranges thereof, including a pressure chamber formed across the step between the first valve portion and the second valve portion, and opening in a fluid passage through a flow in passage on a side of the first pressure receiving surface of the valve body; a spring provided in the cylinder to press the valve body toward the fluid passage; a valve hole provided in a portion of the cylinder in which the first valve portion slides, and opened by the valve body receiving, on the first pressure receiving surface, pressure of a fluid flowing in the fluid passage and sliding in the cylinder against an pressing force of the spring; a relief passage communicating with the valve hole; a first communication path having one end opening in the pressure chamber and the other end opening in the fluid passage; a second communication path branching off from the first communication path and opening in the relief passage; and a switching valve provided in a branch portion between the first communication path and the second communication path and capable of switching between communication between the fluid passage and the pressure chamber and communication between the pressure chamber and the relief passage, whereby the shaft of the valve body has a smaller diameter than the first valve portion, and the pressure chamber and the flow-in passage both extend axially to make the fluid flow axially.

Preferably, the fluid is oil, the switching valve is an electromagnetic oil control valve having a spool valve portion in the branch portion, and the oil control valve varies a duty ratio, which is a percentage of time to a cycle of a drive voltage applied, to control an operation position of a spool of the spool valve portion, thereby adjusting a flow rate of the oil supplied from the fluid passage to the pressure chamber.

Preferably, the valve body and the spool valve portion of the oil control valve are provided with their axes being parallel to each other.

With the variable relief valve device of the present invention, the valve body includes the first valve portion and the second valve portion having a larger diameter than the first valve portion and having the second pressure receiving surface with a larger pressure receiving surface area, the first pressure receiving surface of the first valve portion that forms the front end of the valve body is pressed by the fluid in the fluid passage to cause the valve body to slide in the cylinder against the pressing force of the spring and open the valve hole in the first valve portion and discharge part of the fluid to the relief passage. Also, the switching valve is switched to supply part of the fluid in the fluid passage through the first communication path to the pressure chamber between the first valve portion and the second valve portion to press the second pressure receiving surface of the second valve portion. This can provide simple configurations of the valve body and the cylinder, and allow a pressing force on the second pressure receiving surface to assist a pressing force on the first pressure receiving surface to change valve opening pressure of the valve body.

The pressure chamber between the first valve portion and the second valve portion is not configured to always discharge the fluid supplied unlike the configuration disclosed in Japanese Patent Laid-Open No. 2017-36830. Thus, an almost all amount of the fluid supplied to the pressure chamber immediately presses the second pressure receiving surface although some fluid may leak from a minute gap between the valve body and the cylinder, thereby allowing the valve opening pressure of the valve body to be changed with high responsiveness.

Unlike the structure in which part of the fluid is discharged while the fluid is passed through a center of the cylinder as disclosed in Japanese Patent Laid-Open No. 2017-36830, the valve hole is opened/closed by the first valve portion on a front end side of the valve body to discharge the fluid flowing in the fluid passage to the relief passage. Thus, a passage through which the fluid is introduced from the fluid passage to the cylinder and the first and second communication paths can be freely set without decreasing a diameter of the fluid passage to be smaller than a diameter of the cylinder or increasing the diameter of the cylinder to ensure a flow rate.

### BRIEF DESCRIPTION OF THE DRAWINGS

FIG. 1 is a schematic configuration diagram of an oil circulation system of an engine using a variable relief valve device of the present invention;
FIG. 2 is a sectional view of the variable relief valve device according to the present invention, illustrating an operation of a valve body;
FIG. 3 is a sectional view of the variable relief valve device with valve opening pressure being adjusted; and
FIG. 4 shows a relationship between an engine rotational speed Ne and pressure P of oil flowing in an oil circulation circuit.

### DETAILED DESCRIPTION OF THE PREFERRED EMBODIMENTS

An embodiment of the present invention will be described with reference to the drawings below.

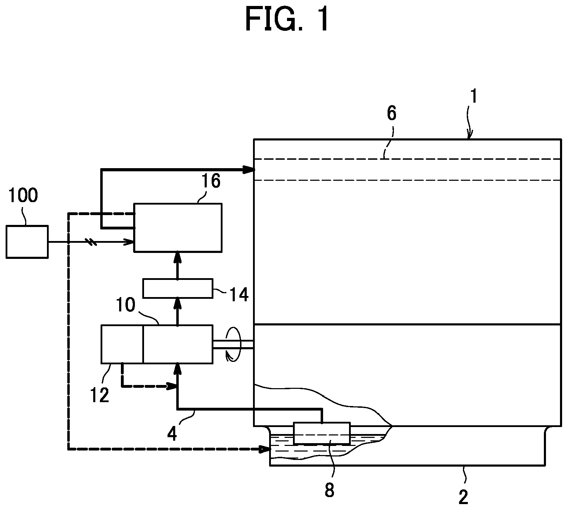

FIG. 1 is a schematic configuration diagram of an oil circulation system of an engine using a variable relief valve device of the present invention.

In an engine 1 that is an internal combustion engine, engine oil (hereinafter simply referred to as oil) that is a lubricant as one of fluids is supplied to drives to lubricate the drives, and an oil pan 2 that stores oil dropping through the drives is provided at a bottom of the engine 1.

As shown by solid arrows, the oil is circulated from the oil pan 2 through an oil circulation circuit 4 that is a fluid passage to a main gallery 6 provided at a top of the engine 1.

In the oil circulation circuit 4, an oil strainer 8 having a filtering function, an oil pump 10 for pumping the oil, an oil filter 14, and a variable relief valve device 16 according to the present invention are provided in order from the side of the oil pan 2.

The oil pump 10 is rotationally operated by a drive force of the engine 1 to pump the oil, and configured so that a discharge amount and discharge pressure of the oil change according to a rotational speed of the engine 1. Near an outlet of the oil pump 10, a relief valve 12 is provided as a safety valve to prevent generation of excessively high oil pressure in the oil circulation circuit 4 when the rotational speed of the engine 1 increases. The relief valve 12 has valve opening pressure set to first predetermined pressure, and is opened when the discharge pressure of the oil pump 10 reaches the first predetermined pressure to return part of the oil to the oil circulation circuit 4 on an upstream side of the oil pump 10 as shown by a dashed arrow.

A variable relief valve device 16 is a relief valve capable of changing the valve opening pressure. The variable relief valve device 16 can change the valve opening pressure of the variable relief valve device 16 irrespective of the discharge pressure of the oil pump 10, for example, within a range of pressure equal to or lower than the first predetermined pressure that is the valve opening pressure of the relief valve 12. The valve opening pressure of the variable relief valve device 16 can be changed to reduce pressure of the oil for lubricating the drives of the engine 1.

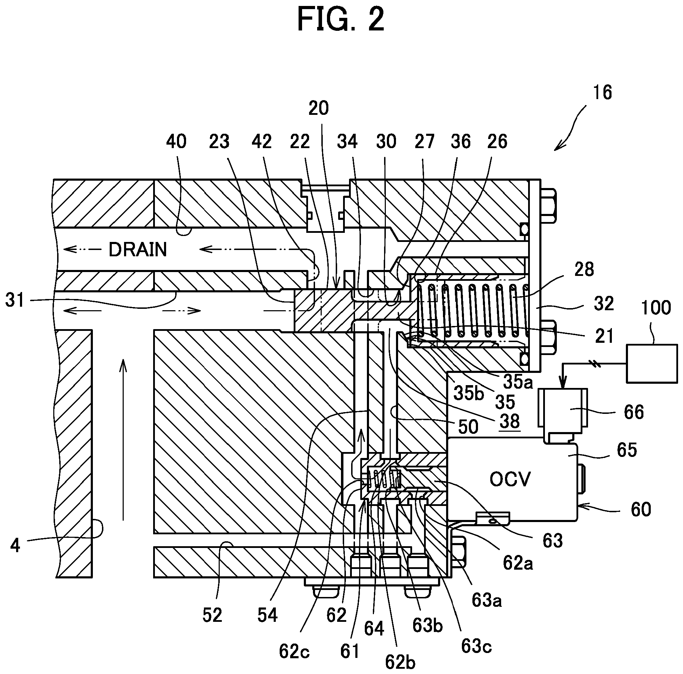

FIG. 2 is a sectional view of the variable relief valve device 16 according to the present invention. A configuration of the variable relief valve device 16 will be described below.

The variable relief valve device 16 is provided with a valve body 20 having a circular section, and a cylinder 30 that houses the valve body 20 axially slidably and is cylindrical. At one end of the cylinder 30, a flow-in passage 31 extends toward the oil circulation circuit 4, and the flow-in passage 31 opens in the oil circulation circuit 4.

The valve body 20 has a first valve portion 22 and a second valve portion 26 coaxially formed and axially spaced apart from each other with a shaft 21 therebetween. The first valve portion 22 has, at a front end, a first pressure receiving surface 23 that receives pressure of oil flowing from the flow-in passage 31, and the second valve portion 26 has a larger diameter than the first valve portion 22 and has a second pressure receiving surface 27 with a larger pressure receiving surface area than the first pressure receiving surface 23. On a rear end side of the valve body 20, a spring 28 is housed in the cylinder 30. One end of the spring 28 abuts against the valve body 20 behind the second pressure receiving surface 27, and the other end abuts against a bottom wall 32 of the cylinder 30. The valve body 20 is pressed toward the flow-in passage 31 by the spring 28.

The cylinder 30 has an inner peripheral surface formed in two stages including a small diameter portion 34 and a large diameter portion 36, the small diameter portion 34 having an inner diameter corresponding to an outer diameter of the first valve portion 22 of the valve body 20, and the large diameter portion 36 having an inner diameter corresponding to an outer diameter of the second valve portion 26, and a step 35 is formed between the small diameter portion 34 and the large diameter portion 36. The step 35 includes a taper portion 35a and a peripheral edge 35b, and the peripheral edge 35b restricts movement of the valve body 20 pressed by the spring 28 toward the flow-in passage 31.

A relief passage 40 extends in parallel with the cylinder 30, and the relief passage 40 communicates with the oil pan 2 as shown by the dashed arrow in FIG. 1. A valve hole 42 provides communication between the small diameter portion 34 of the cylinder 30 and the relief passage 40. The valve hole 42 opens in the small diameter portion 34 of the cylinder 30, and is opened/closed by the valve body 20 reciprocating in the cylinder 30 and the first valve portion 22 moving on the small diameter portion 34. Specifically, when a force of pressure of the oil pressing the first pressure receiving surface 23 of the first valve portion 22 is sufficiently lower than the pressing force of the spring 28, the valve body 20 is pressed toward the flow-in passage 31 by the spring 28 and thus the valve hole 42 is closed by the first valve portion 22. This prevents the oil flowing in the oil circulation circuit 4 from flowing to the relief passage 40. On the other hand, when the force of pressure of the oil pressing the first pressure receiving surface 23 of the first valve portion 22 is higher than the pressing force of the spring 28, the valve body 20 is moved toward the bottom wall 32 against the pressing force of the spring 28 as shown by the double-dot line to open the valve hole 42. Thus, part of the oil flowing in the oil circulation circuit 4 is discharged from the flow-in passage 31 through the valve hole 42 to the relief passage 40 as shown by the double-dot line.

A closed space formed across the step 35 between the first valve portion 22 and the second valve portion 26 in the cylinder 30 constitutes a pressure chamber 38 that stores the oil for applying pressure to the second pressure receiving surface 27 of the second valve portion 26, and an oil passage 50 opens in the pressure chamber 38. An oil passage 52 opens in the oil circulation circuit 4, and an oil passage 54 opens in the relief passage 40. The oil passage 52 communicates with the oil passage 50, and the oil passage 50 and the oil passage 52 serve as a first communication path. The oil passage 54 branches off from the oil passage 50 and serves as a second communication path.

In a branch portion between the oil passage 50 and the oil passage 54, an electromagnetic oil control valve (OCV) 60 as a switching valve is provided. The oil control valve 60 includes a spool valve portion 61 and an electromagnetic unit 65, and the spool valve portion 61 is located in the branch portion between the oil passage 50 and the oil passage 54. The spool valve portion 61 includes a sleeve 62 and a spool 63 that slides in the sleeve 62. The sleeve 62 has, in an outer peripheral surface, a valve hole 62a opening in the oil passage 52 and a valve hole 62b opening in the oil passage 50, and has, in a front end, a valve hole 62c opening in the oil passage 54. The spool 63 has a circumferential groove 63a, and a recess 63c in a front end 63b. Between a peripheral edge of the valve hole 62c in the sleeve 62 and the recess 63c in the spool 63, a spring 64 is provided that presses the spool 63 toward the electromagnetic unit 65. Thus, the oil control valve 60 protrudes and retracts the spool 63 in the sleeve 62 with the electromagnetic unit 65, and changes the position of the groove 63a relative to the valve hole 62a and the valve hole 62b and the position of the front end 63b relative to the valve hole 62b, thereby allowing switching between communication between the oil passage 50 and the oil passage 52 and communication between the oil passage 50 and the oil passage 54.

The spool valve portion 61 of the oil control valve 60 and the valve body 20 are provided with their axes being parallel to each other.

The electromagnetic unit 65 of the oil control valve 60 is electrically connected via a connector 66 to a control unit 100.

When the electromagnetic unit 65 is deenergized to turn off the oil control valve 60 (OFF), the spool 63 is pressed toward the electromagnetic unit 65 by an pressing force of the spring 64 and the front end 63b is located to open the valve hole 62b, thereby blocking communication between the oil passage 50 and the oil passage 52 while providing communication between the oil passage 50 and the oil passage 54. This blocks communication between the oil circulation circuit 4 and the pressure chamber 38, while allows the oil supplied to the pressure chamber 38 to be discharged through the oil passage 54 to the relief passage 40.

FIG. 2 shows the state of the oil control valve 60 being off (OFF).

On the other hand, when the electromagnetic unit 65 is energized to turn on the oil control valve 60 (ON), the oil control valve 60 operates the spool 63 to provide communication between the valve hole 62a and the valve hole 62b through the groove 63a against the pressing force of the spring 64, thereby providing communication between the oil passage 50 and the oil passage 52, while blocking communication between the oil passage 50 and the oil passage 54. This blocks communication between the pressure chamber 38 and the relief passage 40, while provides communication between the oil circulation circuit 4 and the pressure chamber 38, thereby supplying the oil from the oil circulation circuit 4 through the oil passage 52 and the oil passage 50 to the pressure chamber 38.

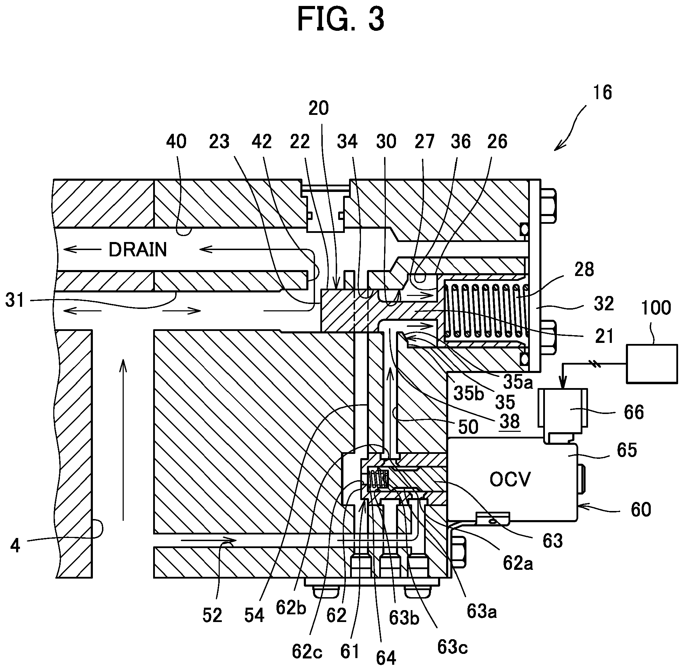

FIG. 3 is a sectional view of the variable relief valve device with the oil control valve 60 being on (ON) to provide communication between the oil circulation circuit 4 and the pressure chamber 38 to supply the oil to the pressure chamber 38.

When the spool 63 is operated to provide communication between the oil passage 50 and the oil passage 52, the oil is supplied from the oil circulation circuit 4 to the pressure chamber 38, and the pressure of the oil is applied to a surface around the shaft 21 on a back side of the first pressure receiving surface 23 and the second pressure receiving surface 27. In this case, since the second valve portion 26 has a larger diameter than the first valve portion 22 and the step 35 has the taper portion 35a, the pressure of the oil is applied more to the second pressure receiving surface 27 by a difference in area between the surface around the shaft 21 on the back side of the first pressure receiving surface 23 and the second pressure receiving surface 27, generating a pressing force on the second pressure receiving surface 27. Specifically, as shown by the arrows, the oil acts on the second pressure receiving surface 27 to press the valve body 20 toward the bottom wall 32 against the pressing force of the spring 28, and the pressing force of the oil applied to the first pressure receiving surface 23 and also the pressing force of the oil applied to the second pressure receiving surface 27 are applied to the valve body 20. Thus, the pressing force of the oil applied to the second pressure receiving surface 27 assists the pressing force of the oil in the oil circulation circuit 4 applied to the first pressure receiving surface 23 of the first valve portion 22. Thus, the valve body 20 can be easily moved toward the bottom wall 32 against the pressing force of the spring 28 to easily open the valve hole 42. Specifically, the valve opening pressure of the valve body 20 is changed to be lower.

The oil control valve 60 can be so-called duty-controlled. Specifically, the oil control valve 60 can vary a duty ratio within a range of 0% to 100%, which is a percentage of time to a cycle of a drive voltage applied to the electromagnetic unit 65 by an instruction from the control unit 100, and control an operation position of the spool 63. The duty ratio of 0% corresponds to the oil control valve 60 being off (OFF), and the duty ratio of 100% corresponds to the oil control valve 60 being on (ON). This allows adjustment of a degree of communication between the oil passage 50 and the oil passage 52, and adjustment of a flow rate of the oil supplied from the oil circulation circuit 4 through the oil passage 52 and the oil passage 50 to the pressure chamber 38.

The effects of the variable relief valve device according to the present invention configured as the above will be described below.

When the rotational speed of the engine 1 is in a low speed rotation range with low discharge pressure of the oil pump 10 and low pressure of the oil flowing in the oil circulation circuit 4, the oil control valve 60 is turned off (OFF) to stop flowing of the oil supplied from the oil circulation circuit 4 to the pressure chamber 38. This eliminates the pressing force of the oil applied to the second pressure receiving surface 27 to prevent the valve hole 42 from being opened. In this case, the valve body 20 is located as shown by the solid line in FIG. 2 due to the pressing force of the spring 28, and the oil flowing in the oil circulation circuit 4 is not discharged from the oil circulation circuit 4 to the relief passage 40. Thus, the pressure of the oil is not reduced, and the oil can be sufficiently circulated from the oil circulation circuit 4 to the drives of the engine 1.

If the rotational speed of the engine 1 gradually increases, and reaches an arbitrary rotational speed Ne1 with a light load on the engine 1 as in the case where, for example, a vehicle including the engine 1 and the variable relief valve device according to the present invention is driving on a flat road at constant speed, the oil control valve 60 is turned on (ON) to provide communication between the oil passage 50 and the oil passage 52 to supply the oil from the oil circulation circuit 4 to the pressure chamber 38.

Thus, the oil is supplied from the oil circulation circuit 4 to the pressure chamber 38, the pressing force of the oil applied to the second pressure receiving surface 27 gradually assists the pressing force of the oil in the oil circulation circuit 4 applied to the first pressure receiving surface 23 of the first valve portion 22 to reduce the valve opening pressure of the valve body 20.

When the rotational speed of the engine 1 is low, the pressure of the oil in the oil circulation circuit 4 is low, and a sum of the pressing force of the oil applied to the second pressure receiving surface 27 and the pressing force of the oil applied to the first pressure receiving surface 23 of the first valve portion 22 is also small, and the valve body 20 does not reach a position to open the valve hole 42. Specifically, when the rotational speed of the engine 1 is low and the pressure of the oil in the oil circulation circuit 4 is low, the oil is not discharged from the oil circulation circuit 4 to the relief passage 40 even with the oil control valve 60 being on (ON). Thus, the pressure of the oil is not reduced, and the oil can be sufficiently circulated from the oil circulation circuit 4 to the drives of the engine 1.

When the rotational speed of the engine 1 is relatively high, and the pressure of the oil in the oil circulation circuit 4 is relatively high, the sum of the pressing force of the oil applied to the second pressure receiving surface 27 and the pressing force of the oil applied to the first pressure receiving surface 23 of the first valve portion 22 is also large, and the valve body 20 reaches a position to open the valve hole 42 as shown in FIG. 3, and is opened against the pressing force of the spring 28. When the valve body 20 is opened, part of the oil flowing in the oil circulation circuit 4 is discharged from the valve hole 42 to the relief passage 40 to reduce the pressure of the oil flowing in the oil circulation circuit 4.

When the rotational speed of the engine 1 again reaches the arbitrary rotational speed Ne1, the oil control valve 60 is turned off (OFF). Thus, the spool 63 is returned by the pressing force of the spring 64 to provide communication between the oil passage 50 and the oil passage 54. Of the oil supplied to the pressure chamber 38, oil by an amount of a volume change of the pressure chamber 38 due to the movement of the valve body 20 returned by the pressing force of the spring 28 is discharged through the oil passage 54 to the relief passage 40.

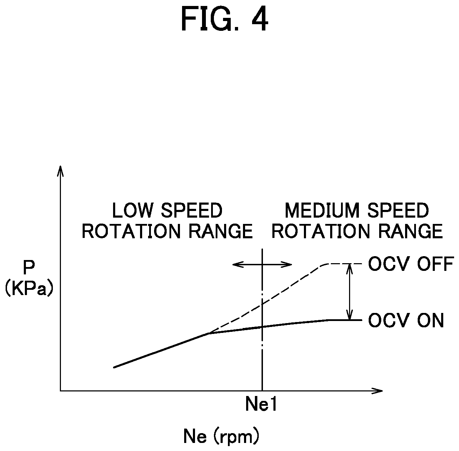

FIG. 4 shows a relationship between the engine rotational speed Ne and the pressure P of the oil flowing in the oil circulation circuit 4 when the valve opening pressure of the valve body 20 is changed, for example, with the oil control valve 60 being on (ON) at the arbitrary rotational speed Ne1. The solid line (OCV ON) shows a relationship when the oil control valve 60 is on (ON), and the dashed line (OCV OFF) shows a relationship when the oil control valve 60 is off (OFF), no oil is supplied to the pressure chamber 38, and the valve opening pressure of the valve body 20 is not changed. In FIG. 4, a branch point between the solid line and the dashed line represents a rotational speed Ne at which the valve body 20 is opened when the oil control valve 60 is turned on (ON) with the rotational speed Ne of the engine 1 being low. The rotational speed Ne at the branch point is appropriately determined according to specifications of the engine 1, a driving situation, a temperature of the oil, or the like. When the engine 1 is a diesel engine, the rotational speed Ne is, for example, about 1000 rpm.

As such, the oil control valve 60 is turned on (ON) to reduce the valve opening pressure of the valve body 20, and thus part of the oil flowing in the oil circulation circuit 4 can be discharged to the relief passage 40 to reduce the pressure P of the oil flowing in the oil circulation circuit 4 from the low speed rotation range to a medium speed rotation range of the engine 1. Thus, the pressure P of the oil flowing in the oil circulation circuit 4 can be substantially constantly controlled irrespective of the engine rotational speed.

Here, the oil control valve 60 is turned on (ON) at the arbitrary rotational speed Ne1, which is, for example, a rotational speed Ne when the vehicle is driving on a flat road at constant speed with a light load on the engine 1. However, the arbitrary rotational speed Ne1 at which the oil control valve 60 is turned on (ON) from off (OFF) is not limited to this, but may be freely selected as shown by the arrow in FIG. 4.

Since the oil control valve 60 can be duty-controlled, for example, when the rotational speed Ne of the engine 1 reaches the rotational speed Ne1, the duty ratio may be once set to 100%, and then the oil control valve 60 may be duty-controlled to reduce the duty ratio. Thus, the spool 63 does not require so high thrust to maintain the operation position once operated, and the operation position of the spool 63 can be maintained even at a low duty ratio, thereby reducing a drive voltage applied to the electromagnetic unit 65 to save power.

Here, the oil control valve 60 is controlled so that when the rotational speed Ne of the engine 1 reaches the arbitrary rotational speed Ne1, the oil control valve 60 is turned on (ON), that is, the duty ratio is set to 100%. However, as another embodiment, the oil control valve 60 may be duty-controlled by appropriately selecting a duty ratio within a range of 0% to 100% as required. Specifically, the oil control valve 60 may be used to adjust the flow rate of the oil supplied to the pressure chamber 38 to adjust the pressure of the oil applied to the second pressure receiving surface 27 of the second valve portion 26 and appropriately change the valve opening pressure of the valve body 20 as required. Thus, a relationship between the engine rotational speed Ne and the pressure P of the oil flowing in the oil circulation circuit 4 can be appropriately adjusted, for example, within a range shown by the arrow between the solid line and the dashed line in FIG. 4. A space between the solid line and the dashed line shown by the arrow in FIG. 4, that is, a difference in pressure of the oil corresponding to a change width of the valve opening pressure may be appropriately set by adjusting the pressure receiving surface area of the second pressure receiving surface 27.

As described above, in the variable relief valve device according to the present invention, the valve body 20 includes the first valve portion 22, and the second valve portion 26 having a larger diameter than the first valve portion 22 and having the second pressure receiving surface 27 with a larger pressure receiving surface area. The first pressure receiving surface 23 of the first valve portion 22, which is the front end of the valve body 20, is pressed by the fluid flowing in the oil circulation circuit 4 to cause the valve body 20 to slide in the cylinder 30 against the pressing force of the spring 28 to open the valve hole 42 with the first valve portion 22 and discharge part of the fluid to the relief passage 40. Also, the oil control valve 60 is used to supply part of the fluid in the oil circulation circuit 4 through the oil passage 50 to the pressure chamber 38 between the first valve portion 22 and the second valve portion 26 to press the second pressure receiving surface 27 of the second valve portion 26. This can provide simple configurations of the valve body 20 and the cylinder 30, allow the pressing force applied to the second pressure receiving surface 27 to assist the pressing force applied to the first pressure receiving surface 23, reduce the valve opening pressure of the valve body 20, and reduce the pressure of the oil flowing in the oil circulation circuit 4 to proper pressure with a reduction of excess pressure. This can minimize the pressure of the oil in the oil circulation circuit 4, and reduce drive torque of the oil pump 10 to improve fuel efficiency of the engine 1.

The pressure chamber 38 formed between the first valve portion 22 and the second valve portion 26 in the cylinder 30 communicates only with the oil passage 50. Specifically, the pressure chamber 38 is not configured to always communicate with the oil pan. Thus, when the oil flows from the oil passage 50 into the pressure chamber 38, the pressure of the oil is immediately applied to the second pressure receiving surface 27 of the second valve portion 26 and can assist the pressing force of the oil in the oil circulation circuit 4 applied to the first pressure receiving surface 23 of the first valve portion 22 although some oil may leak from a minute gap between the valve body 20 and the cylinder 30, and the valve opening pressure of the valve body 20 can be changed with high responsiveness.

In particular, since the oil control valve 60 can be duty-controlled, the duty ratio can be appropriately selected to duty-control the oil control valve 60 to finely adjust the flow rate of the fluid supplied to the pressure chamber 38, and freely change the valve opening pressure of the valve body 20 as required. This allows the pressure of the oil in the oil circulation circuit 4 to be adjusted to optimum pressure according to the rotational speed of or the load on the engine, and can save fuel for the engine 1.

The valve hole 42 is opened/closed by the first valve portion 22 on the front end side of the valve body 20 to discharge part of the oil in the oil circulation circuit 4 to the relief passage 40. Specifically, the oil circulation circuit 4 is not configured so that part of the oil in the oil circulation circuit 4 is discharged while the oil is passing through a center of the cylinder 30. Thus, for example, if the oil circulation circuit 4 is configured so that the oil in the oil circulation circuit 4 passes through the center of the cylinder, a diameter of passage of the oil circulation circuit 4 needs to be smaller than the diameter of the cylinder 30, and the flow rate of the oil flowing in the oil circulation circuit 4 is limited or the diameter of the cylinder 30 needs to be increased to ensure the flow rate. The oil circulation circuit 4 does not have such restriction, the flow-in passage 31, the oil passage 50, the oil passage 52, and the oil passage 54 can be freely set, thereby increasing flexibility of oil passage design.

Thus, as described above, the spool valve portion 61 of the oil control valve 60 and the valve body 20 can be arranged with their axes being parallel to each other. Thus, the variable relief valve device may have a thin configuration, for example, in the direction perpendicular to the plane of FIG. 2.

The description of the embodiment is now completed, but the aspect of the present invention is not limited to the above embodiment.

For example, in the embodiment, the oil control valve 60 is used as the switching valve. However, the switching valve can only switch between communication between the oil passage 50 and the oil passage 52, that is, communication between the oil circulation circuit 4 and the pressure chamber 38, and communication between the oil passage 50 and the oil passage 54, that is, communication between the pressure chamber 38 and the relief passage 40, and the switching valve may be, for example, a three-way valve or the like.

In the embodiment, the spool valve portion 61 of the oil control valve 60 and the valve body 20 are arranged with their axes being parallel to each other, but not limited to this.

In the embodiment, the example in which the variable relief valve device is provided in the oil circulation circuit 4 of the engine 1 and the fluid is oil is described, but the fluid is not limited to oil.

## Claims

1. A variable relief valve device comprising:
a valve body (20) including a first valve portion (22) and a second valve portion (26) coaxially formed and axially spaced apart from each other with a shaft (21) therebetween, the first valve portion having a front end forming a first pressure receiving surface (23), and the second valve portion having a larger diameter than the first valve portion and having a second pressure receiving surface (27) with a larger pressure receiving surface area on a side of the first valve portion;
a cylinder (30) in which the valve body axially slides, the cylinder having an inner peripheral surface formed in two stages to have a step (35) to provide inner diameters corresponding to outer diameters of the first valve portion and the second valve portion in sliding ranges thereof, including a pressure chamber (38) formed across the step between the first valve portion and the second valve portion, and opening in a fluid passage (4) through a flow-in passage (31) on a side of the first pressure receiving surface of the valve body;
a spring (28) provided in the cylinder to press the valve body toward the fluid passage;
a valve hole (42) provided in a portion of the cylinder in which the first valve portion slides, and opened by the valve body receiving, on the first pressure receiving surface, pressure of a fluid flowing in the fluid passage and sliding in the cylinder against a pressing force of the spring;
a relief passage (40) communicating with the valve hole;
a first communication path (50, 52) having one end opening in the pressure chamber and the other end opening in the fluid passage;
a second communication path (54) branching off from the first communication path and opening in the relief passage; and
a switching valve (60) provided in a branch portion between the first communication path and the second communication path and capable of switching between communication between the fluid passage and the pressure chamber and communication between the pressure chamber and the relief passage, **characterized in that**
the shaft (21) of the valve body (20) has a smaller diameter than the first valve portion (22), and
the pressure chamber (38) and the flow-in passage (31) both extend axially to make the fluid flow axially.

2. The variable relief valve device according to claim 1, wherein the fluid is oil, the switching valve (60) is an electromagnetic oil control valve having a spool valve portion (61) in the branch portion, and
the oil control valve varies a duty ratio, which is a percentage of time to a cycle of a drive voltage applied, to control an operation position of a spool of the spool valve portion (61), thereby adjusting a flow rate of the oil supplied from the fluid passage (4) to the pressure chamber (38).

3. The variable relief valve device according to claim 2, wherein the valve body (20) and the spool valve portion (61) of the oil control valve are provided with their axes being parallel to each other.

## Patentansprüche

1. Eine variable Entlastungsventileinrichtung, aufweisend:
einen Ventilkörper (20) enthaltend einen ersten Ventilteil (22) und einen zweiten Ventilteil (26), die koaxial ausgebildet und axial beabstandet sind mit einem Schaft (21) dazwischen, wobei der erste Ventilteil ein Vorderende hat, das eine erste Druckaufnahmefläche (23) bildet, und der zweite Ventilteil einen größeren Durchmesser hat als der erste Ventilteil und auf einer Seite des ersten Ventilteils eine zweite Druckaufnahmefläche (27) mit einer einem größeren Druckaufnahmeflächenbereich hat;
einen Zylinder (30), in dem der Ventilkörper axial gleitet, wobei der Zylinder eine innere periphere Oberfläche hat, die in zwei Abschnitten ausgebildet ist, um eine Stufe (35) zu haben, um innere Durchmesser bereitzustellen, die zu äußeren Durchmessern des ersten Ventilteils und des zweiten Ventilteils in deren Gleitbereichen korrespondieren, enthaltend eine Druckkammer (38) gebildet über die Stufe zwischen dem ersten Ventilteil und dem zweiten Ventilteil, wobei sich der Zylinder durch eine Einströmöffnung (31) auf einer Seite der ersten Druckaufnahmefläche des Ventilkörpers in eine Fluidöffnung (4) öffnet;
eine Feder (28), angeordnet in dem Zylinder, um den Ventilkörper in Richtung der Fluidöffnung zu drücken;
ein Ventilloch (42), angeordnet in einem Teil des Zylinders, in dem der erste Ventilteil gleitet und das geöffnet wird, indem der Ventilkörper an der ersten Druckaufnahmefläche von dem Druck eines Fluids, das in der Fluidöffnung strömt und den Zylinder gegen eine Druckkraft der Feder gleiten lässt, beaufschlagt wird;
eine Entlastungsöffnung (40), die mit dem Ventilloch kommuniziert;
einen ersten Verbindungspfad (50, 52), der eine Endöffnung in der Druckkammer und die andere Endöffnung in der Entlastungsöffnung hat;
einen zweiten Kommunikationspfad (54), der von dem ersten Kommunikationspfad abzweigt und sich in die Entlastungsöffnung öffnet; und
ein Umschaltventil (60) angeordnet in einem Abzweigungsteil zwischen dem ersten Kommunikationspfad und dem zweiten Kommunikationspfad und dazu in der Lage, zwischen einer Verbindung zwischen der Fluidöffnung und der Druckkamer und einer Verbindung zwischen der Druckkammer und der Entlastungsöffnung umzuschalten, **dadurch gekennzeichnet, dass**
der Schaft (21) des Ventilkörpers (20) einen kleineren Durchmesser hat als der erste Ventilteil (22), und
sich die Druckkammer (38) und die Einströmöffnung (31) beide axial erstrecken, um das Fluid axial strömen zu lassen.

2. Die variable Entlastungsventileinrichtung gemäß Anspruch 1, wobei das Fluid Öl ist, das Umschaltventil (60) ein elektromagnetisches Ölsteuerungsventil ist, das einen Steuerventilteil (61) in dem Abzweigungsteil hat, und
das Ölsteuerungsventil eine relative Einschaltdauer variiert, die ein Prozentanteil der Zeit bezogen auf eine angelegte Antriebsspannung ist, um eine Arbeitsstellung eines Schiebers des Steuerventilteils (61) zu steuern, wodurch eine Flussrate des Öls, das von der Fluidöffnung (4) in die Druckkammer gefördert wird, angepasst wird.

3. Die variable Entlastungsventileinrichtung gemäß Anspruch 2, wobei der Ventilkörper (20) und der Steuerventilteil (61) des Ölsteuerungsventils so angeordnet sind, dasss ihre Achsen parallel zueinander sind.

## Revendications

1. Dispositif à soupape de décharge variable, comprenant :
un corps de soupape (20) incluant une première partie de soupape (22) et une seconde partie de soupape (26) formées co-axialement et espacées axialement l'une de l'autre avec une tige (21) entre celles-ci, la première partie de soupape ayant une extrémité avant formant une première surface de réception de pression (23), et la seconde partie de soupape ayant un diamètre plus grand que celui de la première partie de soupape et ayant une seconde surface de réception de pression (27) avec une superficie de surface de réception de pression plus grande sur un côté de la première partie de soupape ;
un cylindre (30) dans lequel le corps de soupape coulisse axialement, le cylindre ayant une surface périphérique intérieure formée en deux étapes pour avoir un épaulement (35) pour fournir des diamètres intérieurs correspondant à des diamètres extérieurs de la première partie de soupape et de la seconde partie de soupape dans des étendues de coulissement de celles-ci, incluant une chambre de pression (38) formée de part en part de l'épaulement entre la première partie de soupape et la seconde partie de soupape, et s'ouvrant dans un passage de fluide (4) à travers un passage d'écoulement entrant (31) sur un côté de la première surface de réception de pression du corps de soupape ;
un ressort (28) prévu dans le cylindre pour presser le corps de soupape vers le passage de fluide ;
un trou de soupape (42) prévu dans une partie du cylindre dans laquelle la première partie de soupape coulisse, et ouvert par le corps de soupape recevant, sur la première surface de réception de pression, une pression d'un fluide s'écoulant dans le passage de fluide et coulissant dans le cylindre contre une force de pression du ressort ;
un passage de décharge (40) communiquant avec le trou de soupape ;
un premier chemin de communication (50, 52) ayant une extrémité s'ouvrant dans la chambre de pression et l'autre extrémité s'ouvrant dans le passage de fluide ;
un second chemin de communication (54) bifurquant du premier chemin de communication et s'ouvrant dans le passage de décharge ; et
une soupape de commutation (60) prévue dans une partie de bifurcation entre le premier chemin de communication et le second chemin de communication et capable de commuter entre la communication entre le passage de fluide et la chambre de pression et la communication entre la chambre de pression et le passage de décharge, **caractérisé en ce que**
la tige (21) du corps de soupape (20) a un diamètre plus petit que celui de la première partie de soupape (22), et
la chambre de pression (38) et le passage d'écoulement entrant (31) s'étendent tous les deux axialement pour faire en sorte que le fluide s'écoule axialement.

2. Dispositif à soupape de décharge variable selon la revendication 1, dans lequel le fluide est de l'huile, la soupape de commutation (60) est une soupape de régulation d'huile électromagnétique ayant une partie de soupape à tiroir (61) dans la partie de bifurcation, et
la soupape de régulation d'huile varie un rapport d'utilisation, qui est un pourcentage de temps par rapport à un cycle d'une tension d'excitation appliquée, pour contrôler une position de fonctionnement d'un tiroir de la partie de soupape à tiroir (61), ainsi ajustant un débit de l'huile fournie depuis le passage de fluide (4) à la chambre de pression (38).

3. Dispositif à soupape de décharge variable selon la revendication 2, dans lequel le corps de soupape (20) et la partie de soupape à tiroir (61) de la soupape de régulation d'huile ont leurs axes parallèles l'un à l'autre.
